# EUROPÄISCHE PATENTSCHRIFT

(11) **EP 3 065 905 B1**
(45) Veröffentlichungstag und Bekanntmachung des Hinweises auf die Patenterteilung: **10.01.2018**
(21) Anmeldenummer: 14793534.0
(22) Anmeldetag: 03.11.2014
(51) Int. Cl.: B23D 21/00, B23K 37/053

(54) **ROHRPROFILSCHNEIDMASCHINE UND VERFAHREN ZUM SCHNEIDEN EINER KONTUR**
TUBE STRUCTURE CUTTING MACHINE AND CONTOUR CUTTING METHOD.
MACHINE DE DÉCOUPE DE STRUCTURE TUBULAIRE ET PROCÉDÉ DE DÉCOUPE D'UN CONTOUR.

(30) Priorität: 04.11.2013 DE 102013018417; 19.07.2014 US 201462026620 P
(43) Veröffentlichungstag der Anmeldung: 14.09.2016
(73) Patentinhaber: Müller Opladen GmbH, 51379 Leverkusen (DE)
(72) Erfinder: HAMACHER, Ralf, 50321 Brühl (DE)
(74) Vertreter: Bauer, Dirk
(86) Internationale Anmeldenummer: PCT/EP2014/073584
(87) Internationale Veröffentlichungsnummer: WO 2015/063301

(56) Entgegenhaltungen:
- CN-U- 201 483 164
- DE-A1- 1 955 761
- US-A- 2 495 360
- US-A- 4 148 467

## Beschreibung

Die Erfindung betrifft zunächst eine Rohrprofilschneidmaschine gemäß dem Oberbegriff des Anspruchs 1, mit einer Schneideinrichtung und mit einer Spanneinrichtung mittels derer ein Rohr in einer horizontal verlaufenden Längsachse zentriert spannbar und um die Längsachse rotierbar ist, mit einem Fahrwerk, mittels dessen das Rohr und/oder die Schneideinrichtung parallel zu der Längsachse zueinander verfahrbar sind, mit einem Vertikalantrieb, mittels dessen die Schneideinrichtung in einer vertikal verlaufenden Hochachse verfahrbar ist, mit einem Drehantrieb, mittels dessen die Schneideinrichtung um die Hochachse drehbar ist, mit einem Schneidkopf an der Schneideinrichtung und mit einem Schwenkantrieb, mittels dessen der Schneidkopf um eine horizontale Schwenkachse schwenkbar ist, und mit einem Zustellantrieb, mittels dessen der Schneidkopf in einer Strahlrichtung zustellbar ist, Wobei durch Rotation der Spanneinrichtung und mittels des Fahrwerks, des Vertikalantriebs, des Drehantriebs, des Schwenkantriebs und des Zustellantriebs der Schneidkopf derart zu dem Rohr verfahrbar ist, dass ein in der Strahlrichtung aus dem Schneidkopf dringender Schneidstrahl an dem Rohr eine Kontur schneidet. Die Erfindung betrifft weiterhin ein Verfahren gemäß dem Oberbegriff des Anspruchs 3 zum Schneiden einer Kontur, wobei an einer Rohrprofilschneidmaschine mit einer Schneideinrichtung und mit einer Spanneinrichtung mittels derer ein Rohr in einer horizontal verlaufenden Längsachse zentriert spannbar und um die Längsachse rotierbar ist, mit einem Fahrwerk, mittels dessen das Rohr und/oder die Schneideinrichtung parallel zu der Längsachse zueinander verfahrbar sind, mit einem Vertikalantrieb, mittels dessen die Schneideinrichtung in einer vertikal verlaufenden Hochachse verfahrbar ist, mit einem Drehantrieb, mittels dessen die Schneideinrichtung um die Hochachse drehbar ist, mit einem Schneidkopf an der Schneideinrichtung und mit einem Schwenkantrieb, mittels dessen der Schneidkopf um eine horizontale Schwenkachse schwenkbar ist, und mit einem Zustellantrieb, mittels dessen der Schneidkopf in einer Strahlrichtung zustellbar ist.

Rohrprofilschneidmaschinen und mit diesen ausgeführte Verfahren der vorstehenden Art sind aus dem Programm der Anmelderin allgemein bekannt. Mit solchen Maschinen und Verfahren werden automatisiert Rohrstutzen und Behälter für das Verschweißen konturiert.

Die zumeist zylindrischen (rohrförmigen) Behälter werden im Allgemeinen durch gewölbte Böden einseitig oder beidseitig geschlossen. Gewölbte Böden sind gegenüber der für die Druckbeaufschlagung theoretisch idealen Halbkugelform abgeflacht. Unter den Bezeichnungen "Klöpperboden" (DIN 28011) und "Korbbogenboden" (DIN 28013) sind verschiedene Ausprägungen solcher gewölbten Böden genormt.

Konturen für Rohranschlüsse an gewölbten Böden können mit den bekannten Rohrprofilschneidmaschinen nicht hergestellt werden. DE 34 39 431 A1 offenbart eine Rohrprofilschneidmaschine gemäß dem Oberbegriff des Anspruchs 1 und ein Verfahren zum Schneiden einer Kontur gemäß dem Oberbegriff des Anspruchs 3.

### Aufgabe

Der Erfindung liegt die Aufgabe zugrunde, eine Kontur an einem gewölbten Boden für einen Behälter zu schneiden.

### Lösung

Ausgehend von der bekannten Rohrprofilschneidmaschine wird nach der Erfindung vorgeschlagen, eine Rohrprofilschneidmaschine gemäß Anspruch 1 vorzusehen, die eine Kippeinrichtung enthält, mittels derer die Spanneinrichtung derart um 90 Grad kippbar ist, dass mittels der Spanneinrichtung ein gewölbter Boden für einen Druckbehälter mit einer vertikal verlaufenden Symmetrieachse zentriert spannbar und um die Symmetrieachse rotierbar ist.

Die Schneideinrichtung der bekannten Rohrprofilschneidmaschine ist für das Schneiden von Konturen um eine vertikale Hochachse ausgelegt und auf solche Konturen durch einen eingeschränkten Schwenkbereich beschränkt. Die erfindungsgemäße Rohrprofilschneidmaschine ermöglicht das Einspannen von gewölbten Böden in einer Weise, die die Nutzung der bewährten Schneideinrichtung der bekannten Rohrprofilschneidmaschine zum Schneiden von Konturen in solche gewölbten Böden erlaubt.

Vorzugsweise weist die Kippeinrichtung einer erfindungsgemäßen Rohrprofilschneidmaschine ein Kippgelenk auf mit einer horizontal verlaufenden Kippachse. Eine solche erfindungsgemäße Rohrprofilschneidmaschine ermöglicht ein reproduzierbares Kippen einer-je nach Anwendung - bis zu mehreren Tonnen schweren Spanneinrichtung. Alternativ kann die Spanneinrichtung aus der Standardanordnung zum Spannen liegender Rohre mittels eines Krans entnommen und um 90 Grad gekippt wieder eingesetzt werden.

Ausgehend von dem bekannten Verfahren wird nach der Erfindung vorgeschlagen, ein Verfahren gemäß Anspruch 3 vorzusehen, bei dem die Spanneinrichtung mittels einer Kippeinrichtung um 90 Grad gekippt, mittels der Spanneinrichtung ein gewölbter Boden für einen Behälter mit einer vertikal verlaufenden Symmetrieachse zentriert gespannt und um die Symmetrieachse rotiert und mittels des Fahrwerks, des Vertikalantriebs, des Drehantriebs, des Schwenkantriebs und des Zustellantriebs der Schneidkopf derart zu dem gewölbten Boden verfahren wird, dass ein in der Strahlrichtung aus dem Schneidkopf dringender Schneidstrahl an dem gewölbten Boden die Kontur schneidet. Ein solches erfindungsgemäßes Verfahren ist mit einer erfindungsgemäßen Rohrprofilschneidmaschine ausführbar und zeichnet sich gleichermaßen durch die vorstehend genannten Vorteile aus.

### Ausführungsbeispiel

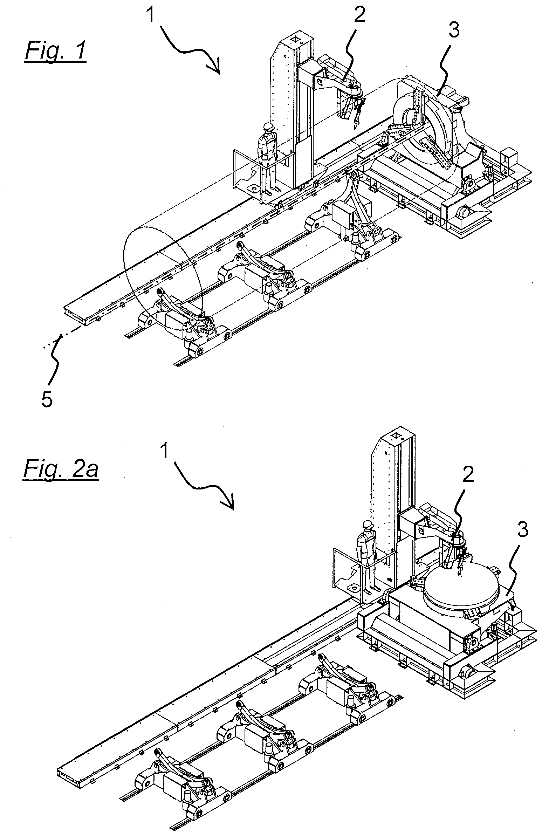

Die Erfindung wird nachfolgend anhand eines Ausführungsbeispiels erläutert. Es zeigen
- Fig. 1: eine erfindungsgemäße Rohrprofilschneidmaschine beim Schneiden einer Kontur an einem Rohr,
- Fig. 2a: die erfindungsgemäße Rohrprofilschneidmaschine beim Schneiden einer Kontur an einem gewölbten Boden und

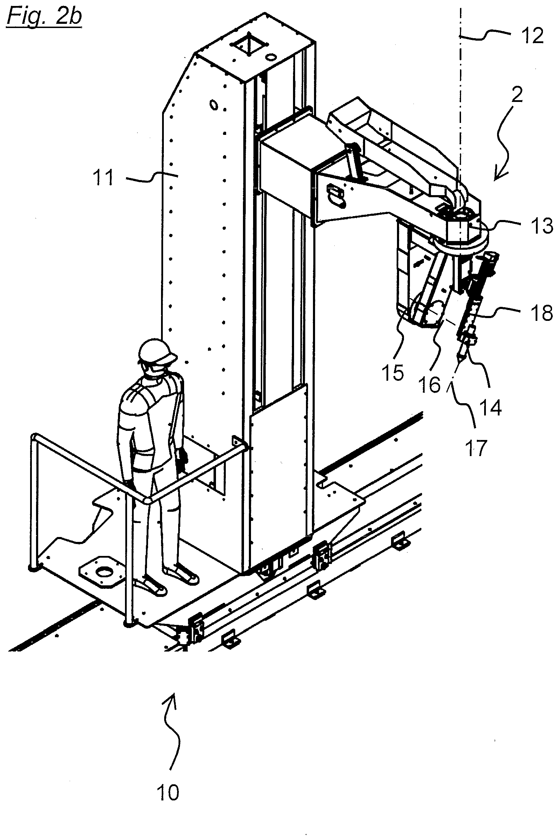

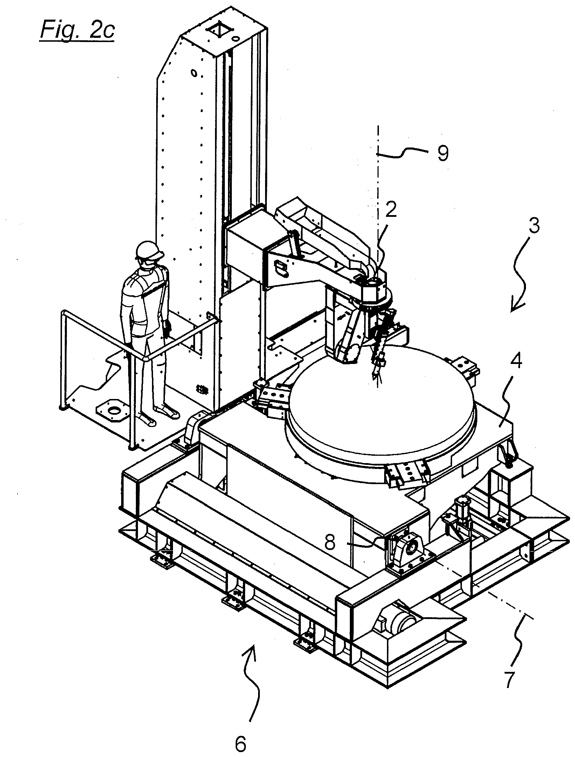

- Fig. 2b/c: Details der vorstehenden Figuren.

Die gezeigte erfindungsgemäße Rohrprofilschneidmaschine 1 weist eine Schneideinrichtung 2 und eine Spanneinrichtung 3 auf. Die Spanneinrichtung 3 ist ortsfest auf einem nicht dargestellten Boden angebracht und weist ein Dreibacken-Spannfutter 4 auf.

Das Spannfutter 4 weist einen Innendurchmesser von 1200 *mm* und einen Außendurchmesser von 2500 *mm* auf und ermöglicht damit zentriert zu einer Längsachse 5 das Spannen von Rohren, deren Außendurchmesser kleiner als 1200 *mm* oder deren Innendurchmesser größer als 2500 *mm* ist.

Das Spannfutter 4 ist mittels einer Kippeinrichtung 6 um eine horizontal verlaufende Kippachse 7 eines Kippgelenks 8 um 90 *Grad* kippbar und so zum Bearbeiten von Rohren um die Längsachse 5 sowie zum Bearbeiten von gewölbten Böden um die vertikal verlaufende Symmetrieachse 9 rotierbar.

Die Schneideinrichtung 2 ist mittels eines Fahrwerks 10 parallel zu der Längsachse 5 und mittels eines Vertikalantriebs 11 in einer vertikal verlaufenden Hochachse 12 verfahrbar sowie mittels eines Drehantriebs 13 um die Hochachse 12 um 360 *Grad* drehbar.

Ein an der Schneideinrichtung 2 angebrachter Schneidkopf 14 (ein Schneidbrenner) ist mittels eines Schwenkantriebs 15 um eine horizontale Schwenkachse 16 um 70 *Grad* aus der Vertikalen schwenkbar. Aus dem Schneidkopf 14 ist ein nicht dargestellter Brennstrahl in einer Strahlrichtung 17 auf das Rohr oder den gewölbten Boden richtbar. Der Schneidkopf 14 ist mittels eines Zustellantrieb 18 in der Strahlrichtung 17 zustellbar.

Die gesteuerten Achsen sind während des Schneidvorgangs in ihren Bewegungen aufeinander abgestimmt und ermöglichen eine exakte Positionierung des Werkstücks zum Schneidkopf 14. Alle gesteuerten Achsen sind mit nicht dargestellten AC-Servoantrieben und Reglern ausgestattet.

Ein nicht dargestellter Lasersensor kontrolliert kontinuierlich den Abstand des Schneidkopfs 14 zur Oberfläche des Werkstücks

In den Figuren sind
- 1: Rohrprofilschneidmaschine
- 2: Schneideinrichtung
- 3: Spanneinrichtung
- 4: Spannfutter
- 5: Längsachse
- 6: Kippeinrichtung
- 7: Kippachse
- 8: Kippgelenk
- 9: Symmetrieachse
- 10: Fahrwerk
- 11: Vertikalantrieb
- 12: Hochachse
- 13: Drehantrieb
- 14: Schneidkopf
- 15: Schwenkantrieb
- 16: Schwenkachse
- 17: Strahlrichtung
- 18: Zustellantrieb

## Patentansprüche

1. Rohrprofilschneidmaschine (1)
a. mit einer Schneideinrichtung (2) und
b. mit einer Spanneinrichtung (3) mittels derer ein Rohr in einer horizontal verlaufenden Längsachse (5) zentriert spannbar und um die Längsachse (5) rotierbar ist,
c. mit einem Fahrwerk (10), mittels dessen das Rohr und/oder die Schneideinrichtung (2) parallel zu der Längsachse (5) zueinander verfahrbar sind,
d. mit einem Vertikalantrieb (11), mittels dessen die Schneideinrichtung (2) in einer vertikal verlaufenden Hochachse (12) verfahrbar ist,
e. mit einem Drehantrieb (13), mittels dessen die Schneideinrichtung (2) um die Hochachse (12) drehbar ist,
f. mit einem Schneidkopf (14) an der Schneideinrichtung (2) und
g. mit einem Schwenkantrieb (15), mittels dessen der Schneidkopf (14) um eine horizontale Schwenkachse (16) schwenkbar ist, und
h. mit einem Zustellantrieb (18), mittels dessen der Schneidkopf (14) in einer Strahlrichtung (17) zustellbar ist,
wobei durch Rotation der Spanneinrichtung (3) und mittels des Fahrwerks (10), des Vertikalantriebs (11), des Drehantriebs (13), des Schwenkantriebs (15) und des Zustellantriebs (18) der Schneidkopf (14) derart zu dem Rohr verfahrbar ist, dass ein in der Strahlrichtung (17) aus dem Schneidkopf (14) dringender Schneidstrahl an dem Rohr eine Kontur schneidet, ***gekennzeichnet durch*** eine Kippeinrichtung (6), mittels derer die Spanneinrichtung (3) derart um 90 Grad kippbar ist, dass mittels der Spanneinrichtung (3) ein gewölbter Boden für einen Behälter mit einer vertikal verlaufenden Symmetrieachse (9) zentriert spannbar und um die Symmetrieachse (9) rotierbar ist.

2. Rohrprofilschneidmaschine nach dem vorgenannten Anspruch, ***dadurch gekennzeichnet, dass*** die Kippeinrichtung (6) ein Kippgelenk (8) mit einer horizontal verlaufenden Kippachse (7) aufweist.

3. Verfahren zum Schneiden einer Kontur, wobei an einer Rohrprofilschneidmaschine (1) mit einer Schneideinrichtung (2) und mit einer Spanneinrichtung (3) mittels derer ein Rohr in einer horizontal verlaufenden Längsachse (5) zentriert spannbar und um die Längsachse (5) rotierbar ist, mit einem Fahrwerk (10), mittels dessen das Rohr und/oder die Schneideinrichtung (2) parallel zu der Längsachse (5) zueinander verfahrbar sind, mit einem Vertikalantrieb (11), mittels dessen die Schneideinrichtung (2) in einer vertikal verlaufenden Hochachse (12) verfahrbar ist, mit einem Drehantrieb (13), mittels dessen die Schneideinrichtung (2) um die Hochachse (12) drehbar ist, mit einem Schneidkopf (14) an der Schneideinrichtung (2) und mit einem Schwenkantrieb (15), mittels dessen der Schneidkopf (14) um eine horizontale Schwenkachse (16) schwenkbar ist, und mit einem Zustellantrieb (18), mittels dessen der Schneidkopf (14) in einer Strahlrichtung (17) zustellbar ist, ***dadurch gekennzeichnet, dass*** die Spanneinrichtung (3) mittels einer Kippeinrichtung (6) um 90 Grad gekippt, mittels der Spanneinrichtung (3) ein gewölbter Boden für einen Behälter mit einer vertikal verlaufenden Symmetrieachse (9) zentriert gespannt und um die Symmetrieachse (9) rotiert und mittels des Fahrwerks (10), des Vertikalantriebs (11), des Drehantriebs (13), des Schwenkantriebs (15) und des Zustellantriebs (18) der Schneidkopf (14) derart zu dem gewölbten Boden verfahren wird, dass ein in der Strahlrichtung (17) aus dem Schneidkopf (14) dringender Schneidstrahl an dem gewölbten Boden die Kontur schneidet.

## Claims

1. A pipe profile cutting machine (1)
a. having a cutting device (2) and
b. having a tensioning device (3) by means of which a pipe can be tensioned in a centred manner in a horizontally running longitudinal axis (5) and can be rotated about the longitudinal axis (5),
c. having a chassis (10) by means of which the pipe and/or the cutting device (2) can be displaced in respect of one another parallel to the longitudinal axis (5),
d. having a vertical drive (11) by means of which the cutting device (2) can be displaced in a vertically running vertical axis (12),
e. having a rotary drive (13) by means of which the cutting device (2) can be rotated about the vertical axis (12),
f. having a cutting head (14) on the cutting device (2) and
g. having a pivot drive (15) by means of which the cutting head (14) is pivotable about a horizontal pivot axis (16) and
h. having an feed drive (18) by means of which the cutting head (14) can be fed in in a beam direction (17),
wherein through rotation of the tensioning device (3) and by means of the chassis (10), the vertical drive (11), the rotary drive (13), the pivot drive (15) and the feed drive (18), the cutting head (14) can be displaced in such a manner relative to the pipe that a cutting beam coming from the cutting head (14) in the beam direction (17) cuts a contour on the pipe, ***characterized by*** a tilting device (6), by means of which the tensioning device (3) can be tilted in such a manner about 90 degrees that by means of the tensioning device (3) a domed bottom for a container with a vertically running symmetrical axis (9) can be tensioned in a centred manner and rotated about the symmetrical axis (9).

2. The pipe profile cutting machine according to the aforementioned claim, ***characterized in that*** the tilting device (6) has a tilting articulation (8) with a horizontally running tilt axis (7).

3. A method for cutting a contour, wherein on a pipe profile cutting machine (1) having a cutting device (2) and having a tensioning device (3) by means of which a pipe can be tensioned in a centred manner in a horizontally running longitudinal axis (5) and rotated about the longitudinal axis (5), having a chassis (10) by means of which the pipe and/or the cutting device (2) can be displaced in respect of one another parallel to the longitudinal axis (5), having a vertical drive (11) by means of which the cutting device (2) can be displaced in a vertically running vertical axis (12), having a rotary drive (13) by means of which the cutting device (2) can be rotated about the vertical axis (12), having a cutting had on the cutting device (2) and having a pivot drive (15) by means of which the cutting head (14) is pivotable about a horizontal pivot axis (16) and having a feed drive (18) by means of which the cutting head (14) can be fed in a beam direction (17), ***characterized in that*** the tensioning device (3) is tilted by 90 degrees by means of a tilting device (6), by means of the tensioning device (3) a domed bottom for a container with a vertically running symmetrical axis (9) is tensioned in a centred manner and rotated about the symmetrical axis (9) and by means of which the chassis (10), the vertical drive (11), the rotary drive (13), the pivot drive (15) and the feed drive (18), the cutting head (14) is displaced in such a manner relative to the domed bottom that a cutting beam coming from the cutting head (14) in the beam direction (17) cuts the contour on the domed bottom.

## Revendications

1. Machine de découpe de profilés tubulaires (1)
a. avec un système de coupe (2) et
b. avec un système de serrage (3) au moyen duquel un tube peut être serré en centrage, dans un axe longitudinal (5) s'écoulant à l'horizontale et est rotatif autour de l'axe longitudinal (5),
c. avec un châssis (10), au moyen duquel le tube et/ou le système de coupe (2) sont déplaçables l'un vers l'autre, à la parallèle de l'axe longitudinal (5),
d. avec un entraînement vertical (11), au moyen duquel le système de coupe (2) est déplaçable dans un axe vertical (12) s'écoulant à la verticale,
e. avec un entraînement en rotation (13), au moyen duquel le système de coupe (2) est rotatif autour de l'axe vertical (12),
f. avec une tête de coupe (14) sur le système de coupe (2) et
g. avec un entraînement en pivotement (15), au moyen duquel la tête de coupe (14) peut pivoter autour d'un axe de pivotement (16) horizontal, et
h. avec un entraînement d'avance (18), au moyen duquel la tête de coupe (14) peut s'avancer dans une direction de faisceau (17),
par rotation du système de serrage (3) et au moyen du châssis (10), de l'entraînement vertical (11), de l'entraînement en rotation (13), de l'entraînement en pivotement (15) et de l'entraînement d'avance (18), la tête de coupe (14) étant déplaçable vers le tube de telle sorte qu'un faisceau de coupe sortant de la tête de coupe (14) dans la direction de faisceau (17) coupe un contour sur le tube, **caractérisée par** un système de basculement (6), au moyen duquel le système de serrage (3) peut basculer de 90 degrés de telle sorte qu'au moyen du système de serrage (3), un fond inférieur bombé pour un récipient avec un axe de symétrie (9) s'écoulant à la verticale puisse être serré en centrage et soit rotatif autour de l'axe de symétrie (9).

2. Machine de découpe de profilés tubulaires selon la revendication précédente, **caractérisée en ce que** le système de basculement (6) comporte une articulation basculante (8) avec un axe de basculement (7) s'écoulant à l'horizontale.

3. Procédé destiné à couper un contour sur une machine de découpe de profilés tubulaires (1) avec un système de coupe (2) et avec un système de serrage (3) au moyen duquel un tube peut être serré en centrage dans un axe longitudinal (5) s'écoulant à l'horizontale et est rotatif autour de l'axe longitudinal (5), avec un châssis (10), au moyen duquel le tube et/ou le système de coupe (2) sont déplaçables l'un vers l'autre à la parallèle de l'axe longitudinal (5), avec un entraînement vertical (11), au moyen duquel le système de coupe (2) est déplaçable dans un axe vertical (12) s'écoulant à la verticale, avec un entraînement en rotation (13), au moyen duquel le système de coupe (2) est rotatif autour de l'axe vertical (12), avec une tête de coupe (14) sur le système de coupe (2) et avec un entraînement en pivotement (15), au moyen duquel la tête de coupe (14) peut pivoter autour d'un axe de pivotement (16) horizontal et avec un entraînement d'avance (18), au moyen duquel la tête de coupe (14) peut être avancée dans une direction de faisceau (17), **caractérisé en ce que** le système de serrage (3) est basculé de 90 degrés au moyen d'un système de basculement (6), au moyen du système de serrage (3), un fond inférieur bombé pour un récipient avec un axe de symétrie (9) s'écoulant à la verticale est serré en centrage et tourne autour de l'axe de symétrie (9) et au moyen du châssis (10), de l'entraînement vertical (11), de l'entraînement en rotation (13), de l'entraînement en pivotement (15) et de l'entraînement d'avance (18), la tête de coupe (14) est déplacée vers le fond inférieur bombé de telle sorte qu'un faisceau de coupe sortant de la tête de coupe (14) dans la direction de faisceau (17) coupe le contour sur le fond inférieur bombé.
